# EUROPÄISCHE PATENTSCHRIFT

(11) **EP 1 388 549 B1**
(45) Veröffentlichungstag und Bekanntmachung des Hinweises auf die Patenterteilung: **11.09.2013**
(21) Anmeldenummer: 03015958.6
(22) Anmeldetag: 14.07.2003
(51) Int. Cl.: C08F 285/00, C08L 27/00

(54) **Emulsionscopolymerisate erhältlich mit Hilfe von speziellen Emulgatoren**
Emulsion copolymers obtained with special emulsifiers
Copolymères obtenus en émulsion à l' aide d' émulsifiants spéciaux

(30) Priorität: 06.08.2002 DE 10236050
(43) Veröffentlichungstag der Anmeldung: 11.02.2004
(73) Patentinhaber: BASF SE, 67056 Ludwigshafen (DE)
(72) Erfinder: Weiss, Axel, Dr., 67346 Speyer (DE); Hummerich, Rainer, Dr., 67551 Worms (DE); Nolte, Rainer, Dr., 67117 Limburgerhof (DE); Meister, Martin, Dr., 67434 Neustadt (DE); Landherr, Kenneth, 67071 Ludwigshafen (DE)

(56) Entgegenhaltungen:
- US-A- 3 971 835

## Beschreibung

Die vorliegende Erfindung betrifft Emulsionscopolymerisate, erhältlich durch
A. Emulsionspolymerisation von 5 bis 50 Gew.-% eines Monomerengemischs A, das sich mit den Monomerengemischen B und C zu insgesamt 100 Gew.-% addiert, aus
   a₁₎ 50 bis 99,99 Gew.-% Styrol oder dessen kernsubstituierten Derivaten (Monomere I)
   a₂₎ 0 bis 5 Gew.-% eines aliphatischen konjugierten Diens mit bis zu 6 C-Atomen (Monomere II)
   a₃₎ 0 bis 49,99 Gew.-% eines C₁-C₁₂-Alkylesters der Acrylsäure oder der Methacrylsäure (Monomere III)
   a₄₎ 0,01 bis 10 Gew.-% eines bi- oder polyfunktionellen nicht konjugierten Monomeren (Monomere IV)
   a₅₎ 0 bis 5 Gew.-% weiterer radikalisch polymerisierbarer Monomere (Monomere V)
   wobei sich die Gew.-% a₁₎ - a₅₎ auf die Gesamtmenge der in Stufe A eingesetzten Monomere beziehen und sich zu insgesamt 100 Gew.-% addieren
B. daran anschließende Pfropfpolymerisation von 15 bis 45 Gew.-% eines Monomerengemisches B, das sich mit den Monomerengemischen A und C zu insgesamt 100 Gew.-% addiert, aus
   b₁₎ 80 bis 99,99 Gew.-% eines Acrylsäureesters (Monomere IIIa)
   b₂₎ 0 bis 5 Gew.-% eines Monomeren II
   b₃₎ 0,01 bis 10 Gew.-% eines Monomeren IV
   wobei sich die Gew.-% b₁₎ - b₃₎ auf die Gesamtmenge der in Stufe B eingesetzten Monomere beziehen und sich zu insgesamt 100 Gew.-% addieren
C. sowie eine weitere daran anschließende Pfropfpolymerisation von 5 bis 80 Gew.-% eines Monomerengemisches C, das sich mit den Monomerengemischen A und B zu insgesamt 100 Gew.-% addiert, aus
   c₁₎ 50 bis 100 Gew.-% eines Monomeren III
   c₂₎ 0 bis 5 Gew.-% eines Monomeren IV
   c₃₎ 0 bis 50 Gew.-% eines Monomeren I
   c₄₎ 0 bis 5 Gew.-% weiterer radikalisch polymerisierbarer Monomere, die von den Monomeren I-IV verschieden sind,
   wobei sich die Gew.-% c₁₎ - c₄₎ auf die Gesamtmenge der in Stufe C eingesetzten Monomere beziehen und sich zu insgesamt 100 Gew.-% addieren und
   wobei man bei der Herstellung der Emulsionscopolymerisate Mono- und Didodecyl disulfoniertes Diphenyloxid (Dowfax^{Ⓡ}2A1), Sulfobernsteinsäuredi-C₈-alkylester (Lumiten^{Ⓡ} IRA), Natriumalkyl (C₁₀-C₁₈) Sulfonat (K30) oder Akyl(C₁₂)arylsulfonat (Arylsulfonat) als Emulgatoren verwendet.

Weiterhin betrifft die vorliegende Erfindung ein Verfahren zur Herstellung der erfindungsgemäßen Emulsionscopolymerisate sowie deren Verwendung als Zuschlagsstoffe in Polyvinylhalogenidharzmassen zur Verbesserung der Schlagzähigkeit. Darüber hinaus erstreckt sich die vorliegende Erfindung auch auf thermoplastische Formmassen aus Polyvinylhalogeniden, enthaltend die erfindungsgemäßen Emulsionscopolymerisate.

Um die Anwendungsbreite von Vinylhalogenidharzmassen, vor allem von Polyvinylchlorid (PVC) zu erweitern, werden den Harzen Modifizierungsmittel zugesetzt, die Verbesserungen bezüglich der Schlagzähigkeit bei Erhalt der Transparenz und Witterungsbeständigkeit bewirken sollen. Als Modifizierungsmittel zur Verbesserung der Schlagzähigkeit von Polyvinylchlorid sind Pfropfcopolymerisate bekannt, bei denen im allgemeinen auf einen kautschukartigen (weichen) Kern (harte) Monomere, deren Homopolymere Glasübergangstemperaturen deutlich über 0°C aufweisen, aufgepfropft sind (Aufbau: weich-hart).

Bei witterungsstabilen PVC-Formmassen werden als Kautschuke vorzugsweise Acrylatkautschuke eingesetzt. Damit die Transparenz des schlagzäh modifizierten Polyvinylchlorids nicht beeinträchtigt wird, verwendet man als Schlagzähmodifier solche Polymerisate, die praktisch den gleichen Brechungsindex haben wie das Polyvinylchlorid. Der Brechungsindex n_{D} des gesamten Pfropfcopolymerisats weicht dann maximal um ± 0,02, insbesondere um ± 0,01, vom Brechungsindex der Matrix ab. Die Gewichtsanteile der Monomeren der Pfropfgrundlage und der Monomeren des gesamten Pfropfcopolymerisats werden so gewählt, dass die genannte Bedingung erfüllt ist.

Derartige Polyvinylhalogenidharzmassen sind u.a. aus der US-A-3763279 bekannt. Das dort beschriebene Pfropfcopolymerisat hat einen zweistufigen Aufbau mit einer Pfropfgrundlage aus vorwiegend Styrol und einer Pfropfhülle aus vorwiegend Alkylacrylaten. In der DE-A-2438402 und der DE-A-2249023 werden als Modifizierungsmittel dreistufige Pfropfpolymere beschrieben, bei deren Herstellung auf ein Grundgerüst aus Acrylatkautschuk zunächst eine Hülle aus Methylmethacrylat aufgepfropft wird, woran sich eine Copolymerisation mit Styrol anschließt. Die EP-A-50848 und die US-A-4064197 betreffen dreistufige Pfropfpolymere, auf deren harten Kern aus Polystyrol zunächst ein Dienkautschuk und anschließend eine Hülle aus Alkylmethacrylat aufgepfropft wird.

Weiterhin sind aus der DE-A-2244519, der DE-A-2130989 und der US-A-3971835 Pfropfpolymere bekannt, bei denen ein Polystyrolkern zunächst von einer Hülle aus Acrylatkautschuk umgeben ist, worauf dann in der dritten Stufe Methylmethacrylat aufgepfropft wird. In der DE-A-2557828 und der US-A-4128605 sind als Modifizierungsmittel vierstufige Pfropfpolymere beschrieben, deren harter Polystyrolkern ebenfalls von einem Acrylatkautschuk umgeben ist, wobei beide Stufen in Gegenwart eines allylgruppenhaltigen Vernetzers polymerisiert werden. Es schließen sich zwei Pfropfstufen an, in denen zuerst Methylmethacrylat und dann Styrol aufgepfropft werden.

In der EP-A-379086 ist ein vierstufig aufgebautes Modifizierungsmittel zur Verbesserung der Schlagzähigkeit von transparenten PVC-Formmassen beschrieben, welches einen prinzipiell anderen Aufbau hat. Auf einen (harten) Kern aus vernetztem Polystyrol sind bei diesem Modifizierungsmittel nacheinander eine weiche, kautschukartige, Hülle aus Alkylacrylaten und abschließend wiederum harte Hüllen aus Styrol und Alkylmethacrylaten aufgebracht. (Aufbau: hart-weich-hart). Aus der EP-A-136552 ist ein Modifizierungsmittel für PVC mit wiederum andersartigem Aufbau bekannt. Das dort als Modifizierungsmittel zur Verbesserung der Schlagzähigkeit von PVC empfohlene Pfropfcopolymerisat hat einen kautschukartigen Kern, dann zunächst eine Hülle aus "harten" Monomeren und abschließend wieder eine kautschukartige Hülle (Aufbau: weich-hart-weich). Um die Schlagzähigkeit von PVC-Formmassen zu verbessern, wird dieses Pfropfcopolymerisat in Kombination mit einem Copolymeren, welches 3-30 Gew.-% einer Säure enthält, eingesetzt.

In der DE-A-4106909 werden Pfropfcopolymerisate als Modifizierungsmittel für PVC beschrieben, welche die Herstellung opaleszenzfreier, transparenter und witterungsbeständiger Formteile mit hoher Schlagzähigkeit ermöglichen. Diese Pfropfcopolymerisate sind erhältlich durch Emulsionspolymerisation von Monomerengemischen in vier Stufen in der Reihenfolge A-B-C-D.

Die in der Technik zur Modifikation von PVC eingesetzten Pfropfcopolymerisate sollen der dadurch erhaltenen Mischung u.a. eine gute Schlagzähigkeit, Witterungsstabilität und hohe Transparenz verleihen und den sogenannten Blaustich vermeiden. Neben diesen Eigenschaften ist es vor allem wichtig, die thermische Stabilität der zu verarbeitenden Mischung zu verbessern. Üblicherweise werden dabei bestimmte thermische Stabilisatoren eingesetzt. Durch die Anwesenheit dieser zusätzlichen Additive in der erhaltenen Mischung können aber unerwünschte Wechselwirkungen auftreten, was u.a. die Wirksamkeit der thermischen Stabilisatoren beeinträchtigen kann.

Der vorliegenden Erfindung lag daher die Aufgabe zu Grunde, den geschilderten Nachteilen abzuhelfen und neue Emulsionscopolymerisate bereit zu stellen, welche mit Polyvinylhalogenidharzmassen Mischungen ergeben, welche sich u.a. durch eine hohe thermische Stabilität bei zugleich hoher Schlagzähigkeit, Witterungsstabilität und Transparenz und praktisch keinen Blaustich auszeichnen.

Demgemäß wurden die eingangs beschriebenen neuen Emulsionscopolymerisate entwickelt. Weiterhin wurde ein neues Herstellungsverfahren für die erfindungsgemäßen Emulsionscopolymerisate gefunden.

Die erfindungsgemäßen Emulsionscopolymerisate sind durch nacheinander ablaufende Emulsionspolymerisationen gemäß den einzelnen Stufen A, B und C erhältlich. Dabei können auch die Emulsionspolymerisationen der Stufen A und B miteinander vertauscht werden, wodurch zuerst die Emulsionspolymerisation der Stufe B und anschließend die der Stufe A ausgeführt wird.

### Stufe A:

Als Monomere I eignen sich vor allem Styrol, Vinyltoluol, α- und β-Methylstyrol, α-Butylstyrol, 4n-Butylstyrol sowie 4n-Decylstyrol. Besonders bevorzugt ist dabei Styrol.

Es ist auch möglich, ein Gemisch verschiedener Monomerer I einzusetzen. Die Menge an Monomer I beträgt 50 bis 99,99 Gew.-%, vorzugsweise 70 bis 99 Gew.-%, bezogen auf die Gesamtmenge an Monomeren der Stufe A.

Geeignete aliphatische konjugierte Diene (Monomere II) sind vorzugsweise solche mit 4 - 6 C-Atomen, beispielsweise Isopren, Chloropren oder Butadien. An Dien werden 0 - Gew.-%, vorzugsweise 0 - 4 Gew.-%, bezogen auf die Gesamtmenge der in Stufe A) verwendeten Monomere, eingesetzt.

Zusätzlich können noch 0 - 49,99 Gew.-% eines C₁-C₁₂-Alkylesters der Acrylsäure oder der Methacrylsäure (Monomere III) copolymerisiert werden. Geeignete Monomere III sind beispielsweise i-Butylacrylat, n-Butylacrylat, Methylacrylat, Methylmethacrylat oder Ethylmethacrylat sowie 2-Ethylhexylacrylat. Die Angabe der Gew.-% bezieht sicht dabei auf die Gesamtmenge der Monomeren von Stufe A.

Außerdem können noch 0,01 bis 10 Gew.-%, insbesondere 0,1 bis 5 Gew.-%, bezogen auf die Gesamtmenge an Monomeren der Stufe A eines nicht konjugierten, bi- oder polyfunktioniellen Monomeren IV zugesetzt werden, beispielsweise Acryl- oder Methacrylsäureester mehrwertiger Alkohole wie 1,4-Butandioldiacrylat, Polyvinylether mehrwertiger Alkohole wie Butandioldivinylether oder Acryl- oder Methacrylsäureester ungesättigter Alkohole wie zum Beispiel Allylacrylat oder Allylmethacrylat. Besonders bevorzugt ist dabei Allylmethacrylat.

Daneben können noch 0 - 5 Gew.-% weiterer radikalisch polymerisierbarer Monomere V copolymerisiert werden, beispielsweise Acrylnitril oder Methacrylnitril.

Die Gesamtmenge der eingesetzten Monomere I) bis V) in der Stufe A addiert sich dabei auf 100 %.

Die Polymerisation kann unter den für Emulsionspolymerisationen üblichen Bedingungen der radikalischen Polymerisation durchgeführt werden. Als Initiatoren können wasserlösliche thermisch zerfallende Initiatoren oder Redoxsysteme eingesetzt werden. Geeignete thermisch zerfallende Initiatoren (Radikalstarter) sind beispielsweise Natriumpersulfat, Kaliumpersulfat oder Ammoniumpersulfat. Als Redoxinitiatoren kommen u.a. Systeme wie Wasserstoffperoxid-Eisen-II-chlorid oder t-Butylhydroperoxid-Natriumformaldehydsulfoxylat in Betracht, ferner wasserlösliche Azoverbindungen oder Redoxinitiatoren wie H₂O₂/Ascorbinsäure.

Die Emulsionspolymerisation wird üblicherweise in Anwesenheit von geeigneten Emulgatoren durchgeführt.

Die Polymerisationstemperatur liegt im allgemeinen zwischen 20-95, vorzugsweise zwischen 40 -80°C.

Außerdem können noch Molgewichtsregler zugesetzt werden. Als Molgewichtsregler kommen aliphatische und aromatische Mercaptane wie Thiophenol oder t-Dodecylmercaptan, aber auch Thioester in Betracht.

Man kann die Polymerisation bei 1 - 40, vorzugsweise bei 1-20 bar, vornehmen. Es empfiehlt sich, unter einer Stickstoffatmosphäre zu arbeiten.

Vorzugsweise wendet man eine diskontinuierliche Fahrweise an, aber es ist auch möglich, bei kontinuierlicher Fahrweise in einer Rührkesselkaskade zu arbeiten.

### Stufe B:

In Gegenwart der Polymerisationsemulsion der Stufe A werden nun in der Stufe B weitere Monomere in Form eines Monomerengemisches aus den Monomeren IIIa, II und IV aufgepfropft.

Als Monomere IIIa eignen sich Acrylsäureester, insbesondere C₁-C₁₂-Alkylester der Acrylsäure, beispielsweise n-Butylacrylat, 2-Ethylhexylacrylat, sowie die Ester der C₂-C₈-Mono- oder Polyglykolmonoethern wie Ethylglykolacrylat oder Methyldiethylglykolacrylat. Die Menge an Acrylsäureestern wird dabei so bemessen, dass sie 80 bis 99,99 Gew.-%, vorzugsweise 90 bis 99,5 Gew.-% der Gesamtmenge der in der Stufe B eingesetzten Monomere beträgt.

Als Monomere II kommen die gleichen Monomere in Betracht, die bereits in der Stufe A unter der Bezeichnung Monomere II aufgeführt wurden, also aliphatische, konjugierte Diene wie u.a. Isopren, Chloropren oder Butadien. Die Menge an Monomeren II in der Stufe B beträgt 0 bis 5 Gew.-%, vorzugsweise 0 bis 3 Gew.-%, bezogen auf die Gesamtmenge der in Stufe B eingesetzten Monomere.

Weiterhin werden in der Stufe B 0,01 bis 10 Gew.-%, insbesondere 0,1 bis 5 Gew.-% Monomere IV, bezogen auf die Gesamtmenge der in Stufe B eingesetzten Monomere, copolymerisiert. Geeignete Monomere IV sind die gleichen Monomere, wie sie bereits unter der Bezeichnung Monomere IV in der Stufe A erwähnt wurden, also im wesentlichen bi- oder polyfunktionielle, nicht konjugierte Monomere wie zum Beispiel Acryl- oder Methacrylsäureester mehrwertiger Alkohole oder Acryl- oder Methacrylsäureester ungesättigter Alkohole. Besonders bevorzugte Monomere IV sind u.a. Butandioldiacrylat, Trimethylolpropantriacrylat oder Allylmethacrylat.

Im übrigen kann die Polymerisation der Stufe B unter den gleichen Bedingungen wie in der Stufe A geschildert durchgeführt werden.

Die Gesamtmenge der eingesetzten Monomere IIIa, II und IV in der Stufe B addiert sich dabei auf 100 %.

Im Anschluß daran erfolgt dann in Gegenwart der Polymerisationsemulsionen der Stufen A und B in der Stufe C das Aufpfropfen weiterer Monomerer III, IV, I und von I bis IV verschiedenen Monomeren.

### Stufe C:

In der Stufe C werden 50 bis 100 Gew.-%, insbesondere 70 bis 95 Gew-.% Monomere III, bezogen auf die Gesamtmenge der Monomeren von Stufe C, copolymerisiert. Dabei handelt es sich um die gleichen Monomere III, die bereits als Monomere III in der Stufe A beschrieben wurden, also um C₁-C₁₂-Alkylester der Acrylsäure oder der Methacrylsäure. Besonders geeignete Monomere III sind u.a. n-Butylacrylat, iso-Butylacrylat, Methylacrylat, Methylmethacrylat, Ethylmethacrylat oder 2-Ethylhexylacrylat.

Weiterhin können in der Stufe C 0 bis 5 Gew-.%, insbesondere 0 bis 3 Gew.-%, bezogen auf die Gesamtmenge an Monomeren der Stufe C, eines Monomeren IV hinzupolymerisiert werden. Dabei handelt es sich um die gleichen Monomere IV wie in Stufe A aufgezählt, d.h. im wesentlichen um nicht konjugierte, bi- oder polyfunktionelle Monomere IV, beispielsweise um Acryl- oder Methacrylsäureester mehrwertiger Alkohole wie 1,4-Butandioldiacrylat, um Polyvinylether mehrwertiger Alkohole wie Butandioldivinylether oder um Acryl- oder Methacrylsäureester ungesättigter Alkohole wie zum Beispiel Allylacrylat oder Allylmethacrylat.

Darüber hinaus können in der Stufe C auch noch 0 bis 50 Gew.-%, insbesondere 5 bis 30 Gew.-% Monomere I, bezogen auf die Gesamtmenge der Monomeren von Stufe C, einpolymerisiert werden. Geeignete Monomere I sind die gleichen Monomere wie in Stufe A beschrieben, also im wesentlichen Styrol, Vinyltoluol, α- und β-Methylstyrol, α-Butylstyrol, 4n-Butylstyrol sowie 4n-Decylstyrol. Besonders bevorzugt ist Styrol.

Neben diesen Monomeren können in der Stufe C noch 0 bis 5 Gew.-%, insbesondere 0 bis 3 Gew.-%, bezogen auf die Gesamtmenge der Monomeren von Stufe C, weiterer radikalisch polymerisierbarer Monomerer, welche von den Monomeren I bis V verschieden sind, hinzupolymerisiert werden. Beispiele für solche Monomere sind u.a. Acrylsäure, Methacrylsäure, Vinylacetat, Vinylchlorid, Acrylnitril und Methacrylnitril.

Die Polymerisation der Stufe C kann unter den gleichen Bedingungen wie in der Stufe A geschildert durchgeführt werden.

Die Gesamtmenge der in Stufe C eingesetzten Monomere III, IV, I und davon verschiedene Monomere, welche radikalisch polymerisierbar sind, addiert sich dabei auf 100 Gew-.%. Ebenso addieren sich die Monomergemische A, B und C ebenfalls auf 100 Gew.-%.

Die erfindungsgemäßen Emulsionscopolymerisate sind dadurch charakterisiert, daß man bei ihrer Herstellung Mono- und Didodecyl disulfoniertes Diphenyloxid (DowfaxⓇ2A1), Sulfobemsteinsäuredi-C₈-allylester (Lumiten® IRA), Natriumalkyl (C₁₀- C₁₆) Sulfonat (K30) oder Alkyl(C₁₂)aryisulfonat (Arylsulfonat) als Emulgatoren verwendet, vorzugsweise in einer Menge von 0,01 bis 3,0 Gew.-%, insbesondere in einer Menge von 0,02 bis 1,9 Gew.-%, bezogen auf die Gesamtmenge des Monomerengemisches der Stufen A, B und C.

Die erfindungsgemäß als Emulgatoren zu verwendenden Alkyl- oder Arylsulfonate oder aber Carboxylate von Alkalimetallen sind dem Fachmann allgemein bekannt und sind im Handel erhältlich. Sie werden üblicherweise während der Herstellung der Emulsionspolymerisate entweder gemeinsam mit den zu verwendenden Monomeren oder aber getrennt von diesen in die wässrige Lösung gegeben.

Die erfindungsgemäßen Emulsionscopolymerisate weisen vorzugsweise mindestens zwei Glasübergangstemperaturen T_{g} auf, wobei eine T_{g1} unterhalb von 0°C und die andere T_{g2} bei mehr als 50°C liegt.

Unter der Glasübergangstemperatur T_{g} wird hier die gemäß ASTM D 3418-82 durch Differentialthermonanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

Die Glasübergangstemperatur der erfindungsgemäßen Emulsionscopolymerisate kann auch über die jeweiligen Glasübergangstemperaturen der enthaltenden Monomere abgeschätzt werden (T.G. Fox, Bull. Am. Phys. Soc. (Ser. II) 1, 123 [1956] und Ullmanns Enzyklopädie der technischen Chemie, Weinheim (1980), S. 17-18).

Bei dem ebenfalls erfindungsgemäßen Verfahren zur Herstellung der Emulsionscopolymerisate werden nacheinander die folgenden Schritte ausgeführt,
A. Emulsionspolymerisation von 5 bis 50 Gew.-% eines Monomerengemischs A, das sich mit den Monomerengemischen B und C zu insgesamt 100 Gew.-% addiert, aus
   a₁₎ 50 bis 99,99 Gew.-% Styrol oder dessen kernsubstituierten Derivaten (Monomere I)
   a₂₎ 0 bis 5 Gew.-% eines aliphatischen konjugierten Diens mit bis zu 6 C-Atomen (Monomere II)
   a₃₎ 0 bis 49,99 Gew.-% eines C₁-C₁₂-Alkylesters der Acrylsäure oder der Methacrylsäure (Monomere III)
   a₄₎ 0,01 bis 10 Gew.-% eines bi- oder polyfunktionellen nicht konjugierten Monomeren (Monomere IV)
   a₅₎ 0 bis 5 Gew.-% weiterer radikalisch polymerisierbarer Monomere (Monomere V)
   wobei sich die Gew.-% a₁₎ - a₅₎ auf die Gesamtmenge der in Stufe A eingesetzten Monomere beziehen und sich zu insgesamt 100 Gew.-% addieren
B. daran anschließende Pfropfpolymerisation von 15 bis 45 Gew.-% eines Monomerengemisches B, das sich mit den Monomerengemischen A und C zu insgesamt 100 Gew.-% addiert, aus
   b₁₎ 80 bis 99,99 Gew.-% eines Acrylsäureesters (Monomere IIIa)
   b₂₎ 0 bis 5 Gew.-% eines Monomeren II
   b₃₎ 0,01 bis 10 Gew.-% eines Monomeren IV
   wobei sich die Gew.-% b₁₎ - b₃₎ auf die Gesamtmenge der in Stufe B eingesetzten Monomere beziehen und sich zu insgesamt 100 Gew.-% addieren
C. sowie eine weitere daran anschließende Pfropfpolymerisation von 5 bis 80 Gew.-% eines Monomerengemisches C, das sich mit den Monomerengemischen A und B zu insgesamt 100 Gew.-% addiert, aus
   c₁₎ 50 bis 100 Gew.-% eines Monomeren III
   c₂₎ 0 bis 5 Gew.-% eines Monomeren IV
   c₃₎ 0 bis 50 Gew.-% eines Monomeren I
   c₄₎ 0 bis 5 Gew.-% weiterer radikalisch polymerisierbarer Monomere, die von den Monomeren I-IV verschieden sind,
   wobei sich die Gew.-% c₁₎ - c₄₎ auf die Gesamtmenge der in Stufe C eingesetzten Monomere beziehen und sich zu insgesamt 100 Gew.-% addieren und
   wobei das Verfahren dadurch gekennzeichnet ist, dass die Herstellung der Emulsionscopolymerisate in Anwesenheit von Mono- und Didodecyl disulfoniertes Diphenyloxid (Dowfax^{Ⓡ}2A1), Sulfobemsteinsäuredi-C₈-alkylester (Lumiten^{®} IRA), Natriumalkyl (C₁₀-C₁₈) Sulfonat (K30) oder Alkyl(C₁₂)arylsulfonat (Arylsulfonat) als Emulgatoren vorgenommen wird.

Die Emulsionspolymerisation wird nach dem erfindungsgemäßen Verfahren vorzugsweise in den einzelnen Stufen A, B und C bei Temperaturen von 20 bis 95°C, insbesondere von 40 bis 80°C in der wässrigen Lösung durchgeführt.

Dabei empfiehlt es sich, die eingesetzten Monomere stufenweise und gegebenenfalls mit dem erfindungsgemäß zu verwendenden Emulgator sowie geeigneten Initiatoren in die wässrige Lösung einzubringen.

Geeignete Initiatoren sind insbesondere radikalische Initiatoren wie organische oder anorganische Peroxide, beispielsweise Natriumperoxodisulfat, Kaliumperoxodisulfat, Ammoniumperoxodisulfat oder tert.Butylhydroperoxid, Wasserstoffperoxid oder organische Azoverbindungen. Darüber hinaus können auch sogenannte Reduktions-Oxidations (Red-Ox)-Initiator Systeme als Initiatoren eingesetzt werden. Diese bestehen aus mindestens einem meist anorganischen Reduktionsmittel und einem anorganischen oder organischen Oxidationsmittel. Die Initiatoren werden vorzugsweise in einer Menge von 0,1 bis 5, besonders bevorzugt in einer Menge von 0,2 bis 3 mol-%, bezogen auf die eingesetzten Monomere verwendet.

Zur Steuerung der Molmassen der Emulsionspolymerisate können in den einzelnen Stufen A, B und C auch geeignete Regler wie zum Beispiel Mercaptane mitverwendet werden.

Die Emulsionspolymerisation zur Herstellung der erfindungsgemäßen Emulsionscopolymerisate kann in den in der Technik üblichen Reaktoren durchgeführt werden, beispielsweise in kontinuierlich oder diskontinuierlich betriebenen Kesseln oder Mischern. Bevorzugte Reaktoren sind dabei Rührkessel.

Das erfindungsgemäße Verfahren kann auch in der Weise abgewandelt werden, dass zuerst die Emulsionspolymerisation der Stufe B und anschließend die Emulsionspolymerisation der Stufe A durchgeführt wird. Auf diese Weise bildet die Stufe B den Kern des Emulsionscopolymerisats und die Stufen A und C dessen innere und äußere Schale. Falls die Reihenfolge nicht abgewandelt wird, besteht der Kern des erfindungsgemäßen Emulsionscopolymerisats aus den Monomeren der Stufe A und die innere und die äußere Schale aus den Monomeren der Stufen B und C.

Weiterhin kann es sich empfehlen, vor der Zugabe der Monomere der einzelnen Stufen zunächst eine Vorlage aus Wasser und einer Saat bereitzustellen und danach schrittweise die Monomere der einzelnen Stufen zulaufen zu lassen. Bei der Saat handelt es sich dabei üblicherweise um ein Emulsionspolymerisat, welches in seiner Zusammensetzung dem Emulsionscopolymerisat der Stufe A entspricht oder diesem zumindest ähnelt.

Die erfindungsgemäßen Emulsionspolymerisate weisen üblicherweise eine mittlere Teilchengröße (d 50) von 50 bis 300 nm, insbesondere von 70 bis 200 nm und besonders bevorzugt von 70 bis 150 nm auf. Ihr Gelgehalt liegt vorzugsweise im Bereich von 0 bis 100 %, insbesondere im Bereich von 90 bis 95 %. Durch die Teilchengröße werden sowohl die optischen Eigenschaften wie Transparenz und Opaleszenz als auch die mechanischen Eigenschaften, insbesondere die Schlagzähigkeit, der erfindungsgemäßen Emulsionscopolymerisate deutlich beeinflußt.

Die erhaltenen erfindungsgemäßen Emulsionscopolymerisate können aus der wässrigen Dispersion mit Hilfe üblicher Verfahren, beispielsweise durch Koagulation, Trocknung oder Sprühtrocknung isoliert und mit Thermoplasten und gegebenenfalls weiteren Zusatzstoffen wie Stabilisatoren, Gleitmitteln, Füllstoffen, Farbstoffen, Pigmenten oder weiteren Modifierzungsmitteln zur Verbesserung der Transparenz, Witterungsbeständigkeit, Wärmeformbeständigkeit, Schlagzähigkeit etc. nach bekannten Verfahren gemischt werden. Die Verarbeitung der so erhaltenen Formmassen erfolgt nach für Thermoplaste üblichen Methoden (Extrudieren, Spritzgießen, Kalandrieren, Pressen, Tiefziehen u.a.).

Die erfindungsgemäßen Emulsionscopolymerisate können als Zuschlagsstoffe für thermoplastische Polymerisate zur Verbesserung ihrer Schlagzähigkeit verwendet werden. Sie eignen sich insbesondere als Zuschlagsstoffe für Harzmassen aus Polyvinylhalogeniden, insbesondere aus Polyvinylchlorid (PVC). Die daraus erhaltenen thermoplastischen Formmassen weisen neben den erfindungsgemäßen Emulsionscopolymerisaten, welche in Mengen von 1 bis 40 Gew.-%, insbesondere von 2 bis 30 Gew.-%, bezogen auf die gesamte Formmasse vorliegen können, vor allem noch übliche Stabilisatoren, Verarbeitungshilfsmittel oder Farbstoffe auf.

Die ebenfalls erfindungsgemäßen thermoplastischen Formmassen weisen neben einer hohen Transparenz und Witterungsbeständigkeit, sowie einer guten Schlagzähigkeit und guten optischen Eigenschaften (keine Opaleszenz und kein Blaustich) insbesondere auch eine hohe thermische Stabilität auf. Durch Wahl von besonders gut geeigneten Alkyl- bzw. Arylsufonaten oder Carboxylaten der Alkalimetalle als Emulgatoren bei der Emulsionspolymerisation kann die thermische Stabilität der erhaltenen Pfropfcopolymerisate entsprechend verändert werden.

### Beispiele

### I. Herstellung der erfindungsgemäßen Emulsionscopolymerisate 1 bis 5 sowie der Vergleichscopolymerisate A und B

Die nachfolgenden erfindungsgemäßen Emulsionscopolymerisate 1 bis 5 sowie die Vergleichscopolymerisate A und B wurden alle ausgehend von einer Vorlage durch dreistufige Emulsionspolymerisation hergestellt. Die Vorlage enthielt als Saat ein Homopolymerisat aus Styrol.

Die Vorlage wurde in einem 21 Kolben mit Rückflusskühler, Stickstoffeinleitung und Metallrührer gefüllt. Unter Stickstoffspülung wurde diese auf 80°C aufgeheizt. 25 % der Initiatorlösung wurde innerhalb von 2 min hinzugegeben und nach 5 min folgte die kontinuierliche Zugabe der Monomeremulsion (Zulauf 1) innerhalb von 2 Stunden. Gleichzeitig wurde die restliche Initiatorlösung innerhalb von 4,75 Stunden hinzugegeben. Nach Beendigung von Zulauf 1 wurde 0,5 Stunde nachpolymerisiert. Im Abschluss wurde Zulauf 2 innerhalb von 1 Stunde und Zulauf 3 sowie 4 nach einer Zulaufpause von 0,75 Stunde innerhalb von 0,5 Stunde zudosiert. Nach Zulaufende wurde 0,5 Stunde nachpolymerisiert und anschließend abgekühlt.

Die Zusammensetzungen der einzelnen Zuläufe sind für alle erfindungsgemäßen Emulsionscopolymerisate 1 bis 5 sowie für die Vergleichspolymerisate A und B nachfolgend wiedergegeben.

| Emulsionscopolymerisat 1 | | |
|---|---|---|
| Vorlage | 200,00 g | Wasser |
| | 8,30 g | Saat |
| | 0,50 g | Natriumhydrogencarbonat |
| Zulauf 1 | 250,00 g | Wasser |
| | 5,00 g | Dowfax 2A1 (Emulgator) |
| | 220,75 g | Styrol |
| | 1,25 g | Allylmethacrylat |
| Zulauf 2 | 150,00 g | Wasser |
| | 3,25 g | Dowfax 2A1 (Emulgator) |
| | 180,40 g | n-Butylacrylat |
| | 1,5 g | Allylmethacrylat |
| Zulauf 3 | 100,00 g | Wasser |
| | 0,75 g | Dowfax 2A1 (Emulgator) |
| | 75,50 g | Methylmethacrylat |
| | 19,65 g | Styrol |
| Zulauf 4 | 1,50 g | Natriumperoxodisulfat (Initiator) |
| | 25,00 g | Wasser |

| Emulsionscopolymerisat 2 | | |
|---|---|---|
| Vorlage | 200,00 g | Wasser |
| | 8,30 g | Saat |
| | 0,50 g | Natriumhydrogencarbonat |
| Zulauf 1 | 250,00 g | Wasser |
| | 5,00 g | K30 (Emulgator) |
| | 220,75 g | Styrol |
| | 1,25 g | Allylmethacrylat |
| Zulauf 2 | 150,00 g | Wasser |
| | 3,25 g | K30 (Emulgator) |
| | 180,40 g | n-Butylacrylat |
| | 1,5 g | Allylmethacrylat |
| Zulauf 3 | 100,00 g | Wasser |
| | 0,75 g | K30 (Emulgator) |
| | 75,50 g | Methylmethacrylat |
| | 19,65 g | Styrol |
| Zulauf 4 | 1,50 g | Natriumperoxodisulfat (Initiator) |
| | 25,00 g | Wasser |

| Emulsionscopolymerisat 3 | | |
|---|---|---|
| Vorlage | 200,00 g | Wasser |
| | 8,30 g | Saat |
| | 0,50 g | Natriumhydrogencarbonat |
| Zulauf 1 | 250,00 g | Wasser |
| | 5,00 g | Arylsulfonat (Emulgator) |
| | 220,75 g | Styrol |
| | 1,25 g | Allylmethacrylat |
| Zulauf 2 | 150,00 g | Wasser |
| | 3,25 g | Arylsulfonat (Emulgator) |
| | 180,40 g | n-Butylacrylat |
| | 1,5 g | Allylmethacrylat |
| Zulauf 3 | 100,00 g | Wasser |
| | 0,75 g | Arylsulfonat (Emulgator) |
| | 75,50 g | Methylmethacrylat |
| | 19,65 g | Styrol |
| Zulauf 4 | 1,50 g | Natriumperoxodisulfat (Initiator) |
| | 25,00 g | Wasser |

| Emulsionscopolymerisat 4 | | |
|---|---|---|
| Vorlage | 200,00 g | Wasser |
| | 8,30 g | Saat |
| | 0,50 g | Natriumhydrogencarbonat |
| Zulauf 1 | 250,00 g | Wasser |
| | 5,00 g | Natriumlaurat (Emulgator) |
| | 220,75 g | Styrol |
| | 1,25 g | Allylmethacrylat |
| Zulauf 2 | 150,00 g | Wasser |
| | 3,25 g | Natriumlaurat (Emulgator) |
| | 180,40 g | n-Butylacrylat |
| | 1,5 g | Allylmethacrylat |
| Zulauf 3 | 100,00 g | Wasser |
| | 0,75 g | Natriumlaurat (Emulgator) |
| | 75,50 g | Methylmethacrylat |
| | 19,65 g | Styrol |
| Zulauf 4 | 1,50 g | Natriumperoxodisulfat (Initiator) |
| | 25,00 g | Wasser |

| Emulsionscopolymerisat 5 | | |
|---|---|---|
| Vorlage | 200,00 g | Wasser |
| | 8,30 g | Saat |
| | 0,50 g | Natriumhydrogencarbonat |
| Zulauf 1 | 250,00 g | Wasser |
| | 5,00 g | Lumiten IRA (Emulgator) |
| | 220,75 g | Styrol |
| | 1,25 g | Allylmethacrylat |
| Zulauf 2 | 150,00 g | Wasser |
| | 3,25 g | Lumiten IRA (Emulgator) |
| | 180,40 g | n-Butylacrylat |
| | 1,5 g | Allylmethacrylat |
| Zulauf 3 | 100,00 g | Wasser |
| | 0,75 g | Lumiten IRA (Emulgator) |
| | 75,50 g | Methylmethacrylat |
| | 19,65 g | Styrol |
| Zulauf 4 | 1,50 g | Natriumperoxodisulfat (Initiator) |
| | 25,00 g | Wasser |

| Vergleichscopolymerisat A | | |
|---|---|---|
| Vorlage | 200,00 g | Wasser |
| | 8,30 g | Saat |
| | 0,50 g | Natriumhydrogencarbonat |
| Zulauf 1 | 250,00 g | Wasser |
| | 5,00 g | Steinapol NLS (Emulgator) |
| | 220,75 g | Styrol |
| | 1,25 g | Allylmethacrylat |
| Zulauf 2 | 150,00 g | Wasser |
| | 3,25 g | Steinapol NLS (Emulgator) |
| | 180,40 g | n-Butylacrylat |
| | 1,5 g | Allylmethacrylat |
| Zulauf 3 | 100,00 g | Wasser |
| | 0,75 g | Steinapol NLS (Emulgator) |
| | 75,50 g | Methylmethacrylat |
| | 19,65 g | Styrol |
| Zulauf 4 | 1,50 g | Natriumperoxodisulfat (Initiator) |
| | 25,00 g | Wasser |

| Vergleichscopolymerisat B | | |
|---|---|---|
| Vorlage | 200,00 g | Wasser |
| | 8,30 g | Saat |
| | 0,50 g | Natriumhydrogencarbonat |
| Zulauf 1 | 250,00 g | Wasser |
| | 5,00 g | Texapon NSO (Emulgator) |
| | 220,75 g | Styrol |
| | 1,25 g | Allylmethacrylat |
| Zulauf 2 | 150,00 g | Wasser |
| | 3,25 g | Texapon NSO (Emulgator) |
| | 180,40 g | n-Butylacrylat |
| | 1,5 g | Allylmethacrylat |
| Zulauf 3 | 100,00 g | Wasser |
| | 0,75 g | Texapon NSO (Emulgator) |
| | 75,50 g | Methylmethacrylat |
| | 19,65 g | Styrol |
| Zulauf 4 | 1,50 g | Natriumperoxodisulfat (Initiator) |
| | 25,00 g | Wasser |

Die auf diese Weise erhaltenen Copolymerisate wurden jeweils nach ihrer Herstellung durch Sprüchtrocknung in die Pulverform überführt.

### Bezeichnung:

Dowfax 2A1, Mono- und Didodecyl disulfoniertes Diphenyloxid der Dow Chemical

K30, Natriumalkyl(C₁₀-C₁₈)sulfonat der Firma Bayer AG.

Arylsulfonat, Alkyl(C₁₂)arylsulfonat der Firma BASF AG.

Lumiten® IRA, Sulfobernsteinsäuredi-C₈-alkylester der Firma BASF AG.

Steinapol NLS, C₁₂-Alkylsulfat der Firma Cognis GmbH.

Texapon NSO, ethoxyliertes Alkylsulfat der Firma Cognis GmbH.

### II. Herstellung einer Formulierung aus dem pulverförmigen Emulsionscopolymerisat und PVC

Die erfindungsgemäßen Emulsionscopolymerisate 1 bis 5 sowie die Vergleichscopolymerisate A und B wurden mit einem pulverförmigen PVC und üblichen Additiven vermengt. Dabei wurden
90 Teile PVC-Pulver (Solvin® 257 RF, der Firma Solvin)
1 Teil Sn-Stabilisator (Irgastab 17 MOK)
0,8 Teile Loxiol G16 (Gleitmittel)
0,3 Teile Loxiol G72 (Gleitmittel)
und 10 Teile Emulsionscopolymerisat
gemischt.

### III.Messungen der thermischen Stabilität der aus II erhaltenen Formulierungen

### Erstellen der Probekörper:

Aus der Pulvermischung wurde ein Walzfell durch 8 min Walzen bei 70°C erstellt. Dieses wurde zu einer Pressplatte bei 180°C für 8 min bei 15 bar und anschließend 5 min bei 200 bar gepresst. Im Anschluß wurden innerhalb von 8 min bei 200 bar auf Raumtemperatur abgekühlt. Probekörper wurden aus der Pressplatte gesägt und anschließend gekerbt (DVK 0,25 mm).

### Bestimmung der thermischen Stabilität:

Aus dem Walzfell wurden Probestücke (1 x 1,5 cm x 0,5 cm) gestanzt. Diese wurden bei 180°C 10 min gelagert. In einem Intervall von 10 min wurden nacheinander Probekörper dem Ofen entnommen und visuell beurteilt. Entscheidend ist der Farbumschlag von gelb nach braun; die dazugehörige Verweilzeit wird als thermische Stabilität definiert.

In der nachfolgenden Tabelle sind die thermischen Stabilitäten der aus den erfindungsgemäßen Emulsionscopolymerisaten (Proben 1 bis 5) sowie den Vergleichscopolymerisaten (Proben A und B) erhaltenen Formulierungen wiedergegeben. Die Probe C stellt eine Mischung dar, die keinen Schlagzähmodifier aufweist und daher als Referenz dient.

**Tabelle**

| Probe | Thermische Stabilität [min.] - bis Farbumschlag gelb-braun - |
|---|---|
| 1 | 100 |
| 2 | 90 |
| 3 | 90 |
| 4 | 90 |
| 5 | 80 |
| A | 30 |
| B | 60 |
| C | 60 |

Die erfindungsgemäßen Emulsionscopolymerisate 1 bis 5 zeichnen sich u.a. durch eine deutlich erhöhte thermische Stabilität aus, verglichen mit den Proben A bis C der Vergleichscopolymerisate.

## Patentansprüche

1. Emulsionscopolymerisate, erhältlich durch
A. Emulsionspolymerisation von 5 bis 50 Gew.-% eines Monomerengemischs A, das sich mit den Monomerengemischen B und C zu insgesamt 100 Gew.-% addiert, aus
a₁) 50 bis 99,99 Gew.-% Styrol oder dessen kernsubstituierten Derivaten (Monomere 1)
a₂) 0 bis 5 Gew.-% eines aliphatischen konjugierten Diens mit bis zu 6 C-Atomen (Monomere II)
a₃) 0 bis 49,99 Gew.-% eines C₁-C₁₂-Alkylesters der Acrylsäure oder der Methacrylsäure (Monomere III)
a₄) 0,01 bis 10 Gew.-% eines bi- oder polyfunktionellen nicht konjugierten Monomeren (Monomere IV)
a₅) 0 bis 5 Gew.-% weiterer radikalisch polymerisierbarer Monomere (Monomere V)
wobei sich die Gew.-% a₁₎ - a₅₎ auf die Gesamtmenge der in Stufe A eingesetzten Monomere beziehen und sich zu insgesamt 100 Gew.-% addieren
B. daran anschließende Pfropfpolymerisation von 15 bis 45 Gew.-% eines Monomerengemisches B, das sich mit den Monomerengemischen A und C zu insgesamt 100 Gew.-% addiert, aus
b₁₎ 80 bis 99,99 Gew.-% eines Acrylsäureesters (Monomere IIIa)
b₂₎ 0 bis 5 Gew.-% eines Monomeren II
b₃₎ 0,01 bis 10 Gew.-% eines Monomeren IV
wobei sich die Gew.-% b₁₎ - b₃₎ auf die Gesamtmenge der in Stufe B eingesetzten Monomere beziehen und sich zu insgesamt 100 Gew.-% addieren
C. sowie eine weitere daran anschließende Pfropfpolymerisation von 5 bis 80 Gew.-% eines Monomerengemisches C, das sich mit den Monomerengemischen A und B zu insgesamt 100 Gew.-% addiert, aus
c₁₎ 50 bis 100 Gew.-% eines Monomeren III
c₂₎ 0 bis 5 Gew.-% eines Monomeren IV
c₃₎ 0 bis 50 Gew.-% eines Monomeren I
c₄₎ 0 bis 5 Gew.-% weiterer radikalisch polymerisierbarer Monomere, die von den Monomeren I-IV verschieden sind,
wobei sich die Gew.-% c₁) - c₄) auf die Gesamtmenge der in Stufe C eingesetzten Monomere beziehen und sich zu insgesamt 100 Gew.-% addieren und
wobei man bei der Herstellung der Emulsionscopolymerisate Mono- und Didodecyl disuffoniertes Diphenyloxid (Dowfax^{®}2A1), Sulfobemsteinsäuredi-C₈-alkylester (Lumiten^{®} IRA), Natriumalkyl C₁₀- C₁₈) Sulfonat (K30) oder Alkyl(C₁₂)arylsulfonat (Arylsulfonat) als Emulgatoren verwendet.

2. Emulsionscopolymerisate nach Anspruch 1, wobei man als Monomere I styrol einsetzt.

3. Emulsionscopolymerisate nach den Ansprüchen 1 bis 2, wobei man als Monomere IV Allylmethacrylat verwendet.

4. Emulsionscopolymerisate nach den Ansprüchen 1 bis 3, wobei als Monomere IIIa n-Butylacrylat eingesetzt wird.

5. Emulsionscopolymerisate nach den Ansprüchen 1 bis 4, wobei die bei der Herstellung der Emulsionspolymerisate eingesetzten Alkyl- oder Arylsulfonate oder aber Carboxylate von Alkalimetallen in einer Menge von 0,01 bis 3,0 Gew.-%, bezogen auf die Gesamtmenge des Monomerengemisches A, B und C, eingesetzt werden.

6. Emulsionscopolymerisate nach den Ansprüchen 1 bis 5, wobei zuerst die Emulsionspolymerisation der Stufe B und anschließend die Emulsionspolymerisation der Stufe A durchgeführt wird.

7. Verfahren zur Herstellung von Emulsionscopolymerisaten gemäß den Ansprüchen 1 bis 6, wobei man die nachfolgenden drei Schritte nacheinander ausführt,
A. Emulsionspolymerisation von 5 bis 50 Gew.-% eines Monomerengemischs A, das sich mit den Monomerengemischen B und C zu insgesamt 100 Gew.-% addiert, aus
a₁₎ 50 bis 99,99 Gew.-% Styrol oder dessen kemsubstituierten Derivaten (Monomere 1)
a₂₎ 0 bis 5 Gew.-% eines aliphatischen konjugierten Diens mit bis zu 6 C-atomen (Monomere II)
a₃₎ 0 bis 49,99 Gew.-% eines C₁-c₁₂-Alkytesters der Acrylsäure oder der Methacrylsäure (Monomere III)
a₄) 0,01 bis 10 Gew.-% eines bi- oder polyfunktionellen nicht konjugierten Monomeren (Monomere IV)
a₅) 0 bis 5 Gew.-% weiterer radikalisch polymerisierbarer Monomere (Monomere V)
wobei sich die Gew.-% a₁) - a₅) auf die Gesamtmenge der in Stufe A eingesetzten Monomere beziehen und sich zu insgesamt 100 Gew.-% addieren
B. daran anschließende Pfropfpolymerisation von 15 bis 45 Gew.-% eines Monomerengemisches B, das sich mit den Monomerengemischen A und C zu insgesamt 100 Gew.-% addiert, aus
b₁) 80 bis 99,99 Gew.-% eines Acrylsäureesters (Monomere llla)
b₂) 0 bis 5 Gew.-% eines Monomeren II
b₃) 0,01 bis 10 Gew.-% eines Monomeren IV
wobei sich die Gew.-% b₁) - b₃) auf die Gesamtmenge der in Stufe B eingesetzten Monomere beziehen und sich zu insgesamt 100 Gew.-% addieren
C. sowie eine weitere daran anschließende Pfropfpotymerisatlon von 5 bis 80 Gew.-% eines Monomerengemisches C, das sich mit den Monomerengemischen A und B zu insgesamt 100 Gew.-% addiert, aus
c₁) 50 bis 100 Gew.-% eines Monomeren III
c₂) 0 bis 5 Gew.-% eines Monomeren IV
c₃) 0 bis 60 Gew.-% eines Monomeren I
c₄) 0 bis 5 Gew.-% weiterer radikalisch polymerisierbarer Monomere, die von den Monomeren I-IV verschieden sind,
wobei sich die Gew.-% c₁) - c₄) auf die Gesamtmenge der in Stufe C eingesetzten Monomere beziehen und sich zu insgesamt 100 Gew.-% addieren, **dadurch gekennzeichnet, dass** die Herstellung der Emulsionscopolymerisate in Anwesenheit von Alkyl- oder Arylsulfonaten oder aber Carboxylaten von Alkalimetallen als Emulgatoren vorgenommen wird.

8. Verfahren nach Anspruch 7, **dadurch gekennzeichnet, dass** man die Emulslonspolymerisation in den Schritten A, B und C bei Temperaturen von 40 bis 80°C ausführt.

9. Verwendung der Emulsionscopolymerisate gemäß den Ansprüchen 1 bis 6 als Zuschlagsstoffe im Potyvinylhalogenidharzmassen zur Verbesserung der Schlagzähigkett.

10. Thermoplastische Formmassen aus Polyvinylhalogeniden, enthaltend 1 bis 40 Gew.-% der Emulsionscopolymerisate nach den Ansprüchen 1 bis 6.

## Claims

1. An emulsion copolymer obtainable by
A. emulsion polymerization of 5 to 50% by weight of a monomer mixture A, which together with the monomer mixtures B and C adds up to a total of 100% by weight, of
a₁) 50 to 99.99% by weight styrene or its derivatives which are substituted in the nucleus (monomers I),
a₂) 0 to 5% by weight of an aliphatic conjugated diene of not more than 6 carbon atoms (monomers II),
a₃) 0 to 49.99% by weight of a C₁-C₁₂-alkyl ester of acrylic acid or of methacrylic acid (monomers III),
a₄) 0.01 to 10% by weight of a bifunctional or polyfunctional nonconjugated monomer (monomers IV) and
a₅) 0 to 5% by weight of further monomers capable of free radical polymerization (monomers V),
the percentages by weight a₁) - a₅) being based on the total amount of the monomers used in stage A and adding up to a total of 100% by weight,
B. subsequent graft polymerization of 15 to 45% by weight of a monomer mixture B, which together with the monomer mixtures A and C adds up to a total of 100% by weight, of
b₁) 80 to 99.99% by weight of an acrylate (monomers IIIa),
b₂) 0 to 5% by weight of a monomer II and
b₃) 0.01 to 10% by weight of a monomer IV,
the percentages by weight b₁) - b₃) being based on the total amount of the monomers used in stage B and adding up to a total of 100% by weight,
C. and a further subsequent graft polymerization of 5 to 80% by weight of a monomer mixture C, which together with the monomer mixtures A and B adds up to a total of 100% by weight, of
c₁) 50 to 100% by weight of a monomer III,
c₂) 0 to 5% by weight of a monomer IV,
c₃) 0 to 50% by weight of a monomer I, and
c₄) 0 to 5% by weight of further free-radically polymerizable monomers which are different from the monomers I-IV,
the percentages by weight C₁) - C₄) being based on the total amount of the monomers used in stage C and adding up to a total of 100% by weight, and
emulsifiers used in the preparation of the emulsion copolymers comprising mono- and didodecyl disulfonated diphenyl oxide (DowfaxⓇ 2A1), sulfosuccinic acid di-C₈-alkyl ester (LumitenⓇ IRA), sodium alkyl (C₁₀-C₁₈) sulfonate (K30) or alkyl (C₁₂) arylsulfonate (arylsulfonate).

2. An emulsion copolymer according to claim 1, where styrene is used as monomer I.

3. An emulsion copolymer according to claim 1 or 2, where aryl methacrylate is used as monomer IV.

4. A emulsion copolymer according to claims 1 to 3, where butyl acrylate is used as monomer IIIa.

5. An emulsion copolymer according to claims 1 to 4, where the alkyl or arylsulfonates or else carboxylates of alkali metals used in preparing the emulsion polymer are used in an amount of from 0.01 to 3.0% by weight, based on the total amount of the monomer mixture A, B and C.

6. An emulsion copolymer according to claims 1 to 5, where first the emulsion polymerization of stage B and subsequently the emulsion polymerization of stage A are carried out.

7. A process for the preparation of an emulsion copolymer according to claims 1 to 6, the following three steps being performed in succession:
A. emulsion polymerization of 5 to 50% by weight of a monomer mixture A, which together with the monomer mixtures B and C adds up to a total of 100% by weight, of
a₁) 50 to 99.99% by weight styrene or its derivatives which are substituted in the nucleus (monomers I),
a₂) 0 to 5% by weight of an aliphatic conjugated diene of not more than 6 carbon atoms (monomers II),
a₃) 0 to 49.99% by weight of a C₁-C₁₂-alkyl ester of acrylic acid or of methacrylic acid (monomers III),
a₄) 0.01 to 10% by weight of a bifunctional or polyfunctional nonconjugated monomer (monomers IV) and
a₅) 0 to 5% by weight of further monomers capable of free radical polymerization (monomers V),
the percentages by weight a₁) - a₅) being based on the total amount of the monomers used in stage A and adding up to a total of 100% by weight,
B. subsequent graft polymerization of 15 to 45% by weight of a monomer mixture B, which together with the monomer mixtures A and C adds up to a total of 100% by weight, of
b₁) 80 to 99.99% by weight of an acrylate (monomers IIIa),
b₂) 0 to 5% by weight of a monomer II and
b₃) 0.01 to 10% by weight of a monomer IV,
the percentages by weight b₁) - b₃) being based on the total amount of the monomers used in stage B and adding up to a total of 100% by weight,
C. and a further subsequent graft polymerization of 5 to 80% by weight of a monomer mixture C, which together with the monomer mixtures A and B adds up to a total of 100% by weight, of
c₁) 50 to 100% by weight of a monomer III,
c₂) 0 to 5% by weight of a monomer IV,
c₃) 0 to 50% by weight of a monomer I, and
c₄) 0 to 5% by weight of further free-radically polymerizable monomers which are different from the monomers I-IV,
the percentages by weight C₁) - C₄) being based on the total amount of the monomers used in stage C and adding up to a total of 100% by weight, wherein the preparation of the emulsion copolymer is performed in the presence of alkyl- or arylsulfonates or else carboxylates of alkali metals as emulsifiers.

8. The process according to claim 7, wherein the emulsion polymerization in steps A, B and C is performed at temperatures of from 40 to 80°C.

9. The use of the emulsion copolymer according to claims 1 to 6 as an additive in polyvinyl halide resin materials for improving the impact strength.

10. A thermoplastic polyvinyl halide molding material, comprising from 1 to 40% by weight of the emulsion copolymer according to claims 1 to 6.

## Revendications

1. Copolymères en émulsion, pouvant être obtenus par :
A. la polymérisation en émulsion de 5 à 50 % en poids d'un mélange de monomères A, qui s'additionne avec les mélanges de monomères B et C pour atteindre au total 100 % en poids, constitué par
a₁) 50 à 99,99 % en poids de styrène ou ses dérivés à noyau substitué (monomères I)
a₂₎ 0 à 5 % en poids d'un diène conjugué aliphatique contenant jusqu'à 6 atomes C (monomères II)
a₃) 0 à 49,99 % en poids d'un ester alkylique en C₁-C₁₂ de l'acide acrylique ou de l'acide méthacrylique (monomères III)
a₄₎ 0,01 à 10 % en poids d'un monomère bi- ou polyfonctionnel non conjugué (monomères IV)
a₅₎ 0 à 5 % en poids d'autres monomères polymérisables par voie radicalaire (monomères V) les % en poids de a₁₎ à a₅) se rapportant à la quantité totale des monomères utilisés à l'étape A et s'additionnant pour atteindre au total 100 % en poids
B. la polymérisation avec greffage ultérieure de 15 à 45 % en poids d'un mélange de monomères B, qui s'additionne avec les mélanges de monomères A et C pour atteindre au total 100 % en poids, constitué par
b₁₎ 80 à 99,99 % en poids d'un ester de l'acide acrylique (monomères IIIa)
b₂₎ 0 à 5 % en poids d'un monomère II
b₃₎ 0,01 à 10 % en poids d'un monomère IV
les % en poids de b₁₎ à b₃₎ se rapportant à la quantité totale des monomères utilisés à l'étape B et s'additionnant pour atteindre au total 100 % en poids
C. ainsi qu'une polymérisation avec greffage ultérieure supplémentaire de 5 à 80 % en poids d'un mélange de monomères C, qui s'additionne avec les mélanges de monomères A et B pour atteindre au total 100 % en poids, constitué par
c₁₎ 50 à 100 % en poids d'un monomère III
_{C2)} 0 à 5 % en poids d'un monomère IV
c₃₎ 0 à 50 % en poids d'un monomère I
c₄₎ 0 à 5 % en poids d'autres monomères polymérisables par voie radicalaire différents des monomères I à IV,
les % en poids de c₁₎ à c₄₎ se rapportant à la quantité totale des monomères utilisés à l'étape C et s'additionnant pour atteindre au total 100 % en poids, et
de l'oxyde de diphényle mono- et didodécyl-disulfoné (DowfaxⓇ 2A1), un ester alkylique en C₈ de l'acide sulfosuccinique (Lumiten® IRA), un alkyl (C₁₀-C₁₈) - sulfonate de sodium (K30) ou un arylsulfonate d'alkyle (C₁₂) (arylsulfonate) étant utilisés en tant qu'émulsifiants lors de la fabrication des copolymères en émulsion.

2. Copolymères en émulsion selon la revendication 1, dans lesquels du styrène est utilisé en tant que monomères I.

3. Copolymères en émulsion selon les revendications 1 à 2, dans lesquels du méthacrylate d'allyle est utilisé en tant que monomères IV.

4. Copolymères en émulsion selon les revendications 1 à 3, dans lesquels de l'acrylate de n-butyle est utilisé en tant que monomères IIIa.

5. Copolymères en émulsion selon les revendications 1 à 4, dans lesquels les alkyl- ou arylsulfonates utilisés lors de la fabrication des polymères en émulsion ou des carboxylates de métaux alcalins sont utilisés en une quantité de 0,01 à 3,0 % en poids, par rapport à la quantité totale des mélanges de monomères A, B et C.

6. Copolymères en émulsion selon les revendications 1 à 5, dans lesquels la polymérisation en émulsion de l'étape B est tout d'abord réalisée et ensuite la polymérisation en émulsion de l'étape A.

7. Procédé de fabrication de copolymères en émulsion selon les revendications 1 à 6, dans lequel les trois étapes suivantes sont réalisées successivement
A. la polymérisation en émulsion de 5 à 50 % en poids d'un mélange de monomères A, qui s'additionne avec les mélanges de monomères B et C pour atteindre au total 100 % en poids, constitué par
a₁₎ 50 à 99,99 % en poids de styrène ou ses dérivés à noyau substitué (monomères I)
a₂₎ 0 à 5 % en poids d'un diène conjugué aliphatique contenant jusqu'à 6 atomes C (monomères II)
a₃₎ 0 à 49,99 % en poids d'un ester alkylique en C₁-C₁₂ de l'acide acrylique ou de l'acide méthacrylique (monomères III)
a₄₎ 0,01 à 10 % en poids d'un monomère bi- ou polyfonctionnel non conjugué (monomères IV)
a₅₎ 0 à 5 % en poids d'autres monomères polymérisables par voie radicalaire (monomères V) les % en poids de a₁₎ à a₅₎ se rapportant à la quantité totale des monomères utilisés à l'étape A et s'additionnant pour atteindre au total 100 % en poids
B. la polymérisation avec greffage ultérieure de 15 à 45 % en poids d'un mélange de monomères B, qui s'additionne avec les mélanges de monomères A et C pour atteindre au total 100 % en poids, constitué par
b₁₎ 80 à 99,99 % en poids d'un ester de l'acide acrylique (monomères IIIa)
b₂₎ 0 à 5 % en poids d'un monomère II
b₃₎ 0,01 à 10 % en poids d'un monomère IV
les % en poids de b₁₎ à b₃₎ se rapportant à la quantité totale des monomères utilisés à l'étape B et s'additionnant pour atteindre au total 100 % en poids
C. ainsi qu'une polymérisation avec greffage ultérieure supplémentaire de 5 à 80 % en poids d'un mélange de monomères C, qui s'additionne avec les mélanges de monomères A et B pour atteindre au total 100 % en poids, constitué par
c₁₎ 50 à 100 % en poids d'un monomère III
c₂₎ 0 à 5 % en poids d'un monomère IV
c₃₎ 0 à 50 % en poids d'un monomère I
c₄₎ 0 à 5 % en poids d'autres monomères polymérisables par voie radicalaire différents des monomères I à IV,
les % en poids de c₁₎ à c₄₎ se rapportant à la quantité totale des monomères utilisés à l'étape C et s'additionnant pour atteindre au total 100 % en poids, **caractérisé en ce que** la fabrication des copolymères en émulsion a lieu en présence d'alkyl- ou d'arylsulfonates ou de carboxylates de métaux alcalins en tant qu'émulsifiants.

8. Procédé selon la revendication 7, **caractérisé en ce que** la polymérisation en émulsion aux étapes A, B et C est réalisée à des températures de 40 à 80 °C.

9. Utilisation des copolymères en émulsion selon les revendications 1 à 6 en tant qu'additifs dans des matériaux résineux d'halogénures de polyvinyle pour améliorer la résistance aux chocs.

10. Matériaux de moulage thermoplastiques à base d'halogénures de polyvinyle, contenant 1 à 40 % en poids des copolymères en émulsion selon les revendications 1 à 6.
